# EUROPEAN PATENT SPECIFICATION

(11) **EP 2 924 372 B1**
(45) Date of publication and mention of the grant of the patent: **27.01.2021**
(21) Application number: 12888677.7
(22) Date of filing: 20.11.2012
(51) Int. Cl.: F25B 7/00, F25B 1/00

(54) **REFRIGERATION DEVICE**
KÜHLVORRICHTUNG
DISPOSITIF DE RÉFRIGÉRATION

(43) Date of publication of application: 30.09.2015
(73) Proprietor: Mitsubishi Electric Corporation, Tokyo 100-8310 (JP)
(72) Inventor: SUGIMOTO, Takeshi, Tokyo 100-8310 (JP); NOMOTO, So, Tokyo 100-8310 (JP); ISHIKAWA, Tomotaka, Tokyo 100-8310 (JP); TAKAYAMA, Keisuke, Tokyo 100-8310 (JP); IKEDA, Takashi, Tokyo 100-8310 (JP)
(74) Representative: Pfenning, Meinig & Partner mbB
(86) International application number: PCT/JP2012/007447
(87) International publication number: WO 2014/080436

(56) References cited:
- EP-A1- 1 134 514
- EP-A2- 0 693 663
- WO-A1-2011/048662
- FR-A1- 2 951 250
- JP-A- 2000 234 811
- JP-A- 2001 227 829
- JP-A- 2001 227 846
- JP-A- 2003 314 914
- JP-A- 2005 180 866
- JP-A- 2012 193 908

## Description

### Technical Field

The present invention relates to a refrigeration apparatus that performs a two-stage refrigerating cycle.

### Background Art

Refrigeration apparatuss have been used where a cascade condenser connects a low-temperature-side circulation circuit through which a low-temperature-side refrigerant circulates and a high-temperature-side circulation circuit through which a high-temperature-side refrigerant circulates. For this kind of refrigeration apparatuss, using a carbon dioxide (hereafter, referred to as "CO₂") in the low-temperature-side circulation circuit as the refrigerants has been proposed (Patent Literature 1). Since CO₂ is a naturally occurring substance and has a low global warming potential (hereafter, referred to as "GWP"), CO₂ does not deplete the ozone layer even when unexpectedly leaking from a refrigeration cycle apparatus, enabling a global-environment-friendly refrigeration apparatus to be configured.

### Citation List

### Patent Literature

Patent Literature 1: Japanese Patent Laid-Open No. 2004-190917

### Summary of Invention

### Technical Problem

In cooling tunas or the like, an inside-refrigeration apparatus temperature is about -50 degrees C, and to achieve this, it is necessary to bring the evaporating temperature in a low-temperature-side evaporator into about -80 through -60 degrees C. However, since the triple point of CO₂ is -56.6 degrees C, using a single CO₂ refrigerant cannot bring the evaporating temperature in the low-temperature-side evaporator into -80 through -60 degrees C, and thus cannot cool tunas or the like at appropriate temperatures. In contrast, using an R404A refrigerant in the low-temperature-side circulation circuit can reduce the evaporating temperature to about - 65 degrees C, but R404A has a GWP of 3920, which has the risk of influencing on the global warming in case of leaking. Document EP-A-1 134 514 discloses a refrigeration apparatus according to the preamble of claim 1.

The present invention is made to solve the above-described problem, and has an object to acquire a refrigeration apparatus that brings the evaporating temperature in the low-temperature-side evaporator into -80 through -60 degrees C, and that has a low GWP and a high reliability.

### Solution to Problem

A refrigeration apparatus according to the present invention that performs a two-stage refrigerating cycle, includes the features of claim 1.

### Advantageous Effect of Invention

In the present invention, using a refrigerant mixture that includes CO₂ and R32 and has a ratio of R32 to the whole refrigerant mixture of 50 to 74%, and including an injection circuit that branches off between the low-temperature-side condenser and the low-temperature-side expansion valve and is connected to the inside of the low-temperature-side compressor can bring the evaporating temperature in the low-temperature-side evaporator into -80 through -60 degrees C, enabling the acquisition of a refrigeration apparatus having a low GWP and a high reliability.

### Brief Description of Drawings

[Fig. 1] Fig. 1 is a diagram showing a refrigerant circuit in Embodiment 1 of the present invention.
[Fig. 2] Fig. 2 is a vapor-liquid equilibrium curve representing the characteristics of a non-azeotropic refrigerant being a mixture of two kinds of refrigerants.
[Fig. 3] Fig. 3 is a relationship diagram between a CO₂ molar fraction and a freezing point in CO₂ refrigerant mixtures.
[Fig. 4] Fig. 4 is a diagram comparing a refrigeration capacity and a COP in Embodiment 1 of the present invention, in accordance with mixing ratios between CO₂ and R32.
[Fig. 5] Fig. 5 is a diagram where a configuration to detect a circulation composition is added to the refrigerant circuit in Fig. 1.
[Fig. 6] Fig. 6 is a vapor-liquid equilibrium curve of a non-azeotropic refrigerant mixture illustrating a circulation composition detection principle 1 in a composition computing unit in Fig. 5.
[Fig. 7] Fig. 7 is a vapor-liquid equilibrium curve of a non-azeotropic refrigerant mixture illustrating a circulation composition detection principle 2 in the composition computing unit in Fig. 5.

### Description of Embodiments

### Embodiment 1

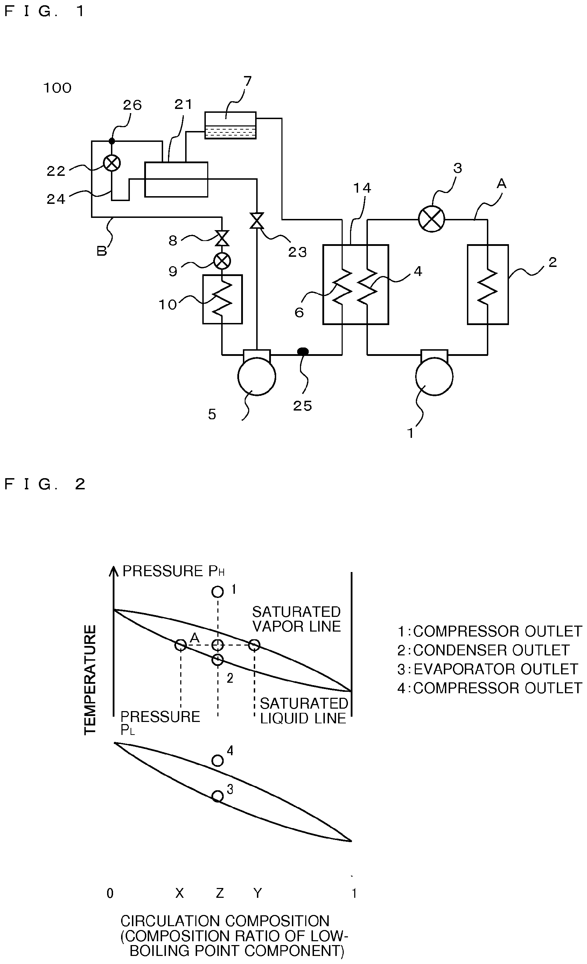

A refrigerant circuit 100 according to Embodiment 1 of the present invention will be described. Fig. 1 is a diagram showing the refrigerant circuit 100 in Embodiment 1 of the present invention.

The refrigerant circuit 100 in the refrigeration apparatus according to the present invention includes a high-temperature-side circulation circuit A and a low-temperature-side circulation circuit B.

The high-temperature-side circulation circuit A is formed by a high-temperature-side compressor 1, a high-temperature-side condenser 2, a high-temperature-side expansion valve 3, and a high-temperature-side evaporator 4, which are connected in series. In the high-temperature-side circulation circuit A, for example, an R410A, R134a, R32, or HFO refrigerant are used as a refrigerant.

The low-temperature-side circulation circuit B is formed by a low-temperature-side compressor 5, a low-temperature-side condenser 6, a low-temperature-side expansion valve 9, and a low-temperature-side evaporator 10, which are connected in series, and is provided with a liquid receiver 7, at the outlet portion of the low-temperature-side condenser 6, that accumulates surplus refrigerant, an HIC heat exchanger 21, and an electromagnetic valve 8. The low-temperature-side circulation circuit B further includes an injection circuit 24 that branches off between the HIC heat exchanger 21 and the electromagnetic valve 8, and bypasses the low-temperature-side evaporator 10 to be connected to the inside of the low-temperature-side compressor 5. This injection circuit 24 includes, in a downstream direction from a diverging point 26, a flow control valve 22, the HIC (Heat Inter Changer) heat exchanger 21, and an electromagnetic injection valve 23. In the low-temperature-side circulation circuit B, a non-azeotropic refrigerant mixture is used that contains at least CO₂ and R32 as refrigerants. The non-azeotropic refrigerant mixture is a refrigerant being a mixture of two or more kinds of refrigerants having different boiling points, and CO₂ is a low-boiling point refrigerant, and R32 is a high-boiling refrigerant.

As the low-temperature-side compressor 5, a positive-displacement compressor is used, and as a double pipe heat exchanger, for example, the HIC heat exchanger 21 leads a liquid refrigerant, flowing from the liquid receiver 7, in a pipe of a double pipe, and leads a refrigerant, obtained by decompressing a refrigerant diverted between the HIC heat exchanger 21 and the electromagnetic valve 8 by the flow control valve 22, outside a pipe being a central part of the double pipe, and subjects the refrigerant to heat exchange in the HIC heat exchanger 21. When a low-temperature-side discharge thermometer 25 that is provided at the discharge portion of the low-temperature-side compressor 5 reads a predetermined value or more, a controller 20 (not shown) gives an instruction to increase the opening degree of the electromagnetic injection valve 23. Similarly, when the low-temperature-side discharge thermometer 25 that is provided at the discharge portion of the low-temperature-side compressor 5 reads less than the predetermined value, the controller 20 gives an instruction to decrease the opening degree of the electromagnetic injection valve 23. In addition, this controller 20 gives an instruction to control the rotation speed of the low-temperature-side compressor 5 and the opening degree of the low-temperature-side expansion valve 9 in accordance with a circulation composition (to be described in Embodiment 2).

The high-temperature-side circulation circuit A and the low-temperature-side circulation circuit B include a cascade condenser 14 in common, and the cascade condenser 14 includes the high-temperature-side evaporator 4 and the low-temperature-side condenser 6. The cascade condenser 14 is, for example, a plate heat exchanger, and performs heat exchange between a high-temperature-side refrigerant that circulates through the high-temperature-side circulation circuit A and a low-temperature-side refrigerant (e.g., non-azeotropic refrigerant mixture) that circulates through the low-temperature-side circulation circuit B.

Next, there will be described the characteristics of the composition of the refrigerant that circulates the refrigerant circuit 100 in which the non-azeotropic refrigerant mixture is used in the low-temperature-side circulation circuit B, with reference to Fig. 2.

Fig. 2 is a vapor-liquid equilibrium curve representing the characteristics of the non-azeotropic refrigerant mixture, which is a mixture of two kinds of refrigerants. As shown in Fig. 2, the vertical axis denotes temperature, the horizontal axis denotes circulation composition (the composition ratio of a low-boiling point component; CO₂ has the low-boiling point and R32 has the high-boiling point), and the parameter is pressure. Fig. 2 shows the characteristics of the non-azeotropic refrigerant mixture in each of a high pressure P_{H} and a low pressure P_{L}, in the low-temperature-side circulation circuit B. The non-azeotropic two-stage refrigerant mixture has a saturated vapor line and a saturated liquid line that are determined in accordance with pressure. A circulation composition of "0" represents a case where only the high-boiling point component is present, a circulation composition of "1" represents a case where only the low-boiling point component is present, and with respect to a refrigerant mixture, the saturated liquid line and the saturated vapor line are determined based on the composition.

The upper side from the saturated vapor line represents a superheated vapor state, the lower side from the saturated liquid line represents the supercooled state, and a region surrounded by the saturated vapor line and the saturated liquid line represents a vapor-liquid-two-phase state. In Fig. 2, Z denotes the composition of a refrigerant enclosed in the refrigerant circuit 100, and a point 1 through a point 4 denote representative points of the refrigerant circuit 100, the point 1 denoting a compressor outlet portion, the point 2 denoting a condenser outlet portion, the point 3 denoting an evaporator inlet portion, and the point 4 denoting a compressor inlet portion.

In the refrigerant circuit 100 in which the non-azeotropic refrigerant mixture is used, the composition of the refrigerant (circulation composition) circulating through the refrigerant circuit 100 is not always identical to the composition of a refrigerant (filling composition) that is filled into the refrigerant circuit 100. This is because a liquid composition at a vapor-liquid-two-phase portion in the refrigerant circuit 100 shown by the point A in Fig. 2 is X that is lower than the circulation composition Z, and a vapor composition is Y that is higher than the circulation composition. In other words, in the vapor-liquid-two-phase portion shown by the point A, there are a liquid being rich in the high-boiling point component and a vapor being rich in the low-boiling point component.

In the liquid receiver 7, the surplus liquid refrigerant is accumulated that is produced in accordance with the operating conditions or the load conditions of the refrigeration apparatus. The refrigerant in the liquid receiver 7 is separated into a liquid refrigerant being rich in the high-boiling point component and a gas refrigerant being rich in the low-boiling point component, and the liquid refrigerant being rich in the high-boiling point component is accumulated in the liquid receiver 7. For this reason, the presence of the liquid refrigerant in the liquid receiver 7 causes the circulation composition of the refrigerant circulating through the low-temperature-side circulation circuit B to tend to contain more low-boiling point component than the filling composition (to increase the circulation composition (the composition ratio of the low-boiling point component)).

When the operating conditions and the load conditions change and the amount of refrigerant accumulated in the liquid receiver 7 changes, the circulation composition in the refrigerant circuit 100 changes. When the circulation composition in the refrigerant circuit 100 changes, as seen from Fig. 2, a relationship between the pressure and the saturation temperature of the refrigerant changes together with a cooling capacity. Therefore, to make the refrigerant circuit 100 be stabilized and moreover exert a predetermined capacity, it is necessary to precisely detect the circulation composition in the refrigerant circuit 100, and appropriately control the rotation speed of the low-temperature-side compressor 5, the opening degree of the low-temperature-side expansion valve 9, or both of them in accordance with the detected circulation composition, so as to adjust a refrigerant flow.

Table 1 shown below is a table in which one refrigerant of the refrigerant mixture is CO₂ and three kinds of refrigerants are given as candidates to be combined with CO₂, summarizing the physical properties of refrigerant mixtures of CO₂ and these three kinds of refrigerants.

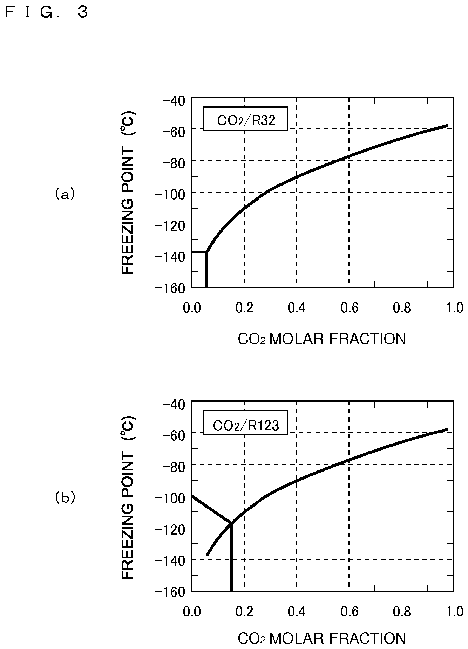

Table 1 shows the GWP and the incombustibility of each refrigerant to be mixed alone, the mixing ratios (molar ratio and mass ratio) of each refrigerant to be mixed to CO₂, and the GWP of a refrigerant mixture mixed in the mixing ratio, the freezing point of each refrigerant mixture, and the temperature gradient of the refrigerant mixture at -70 degrees C. In addition, Fig. 3 is diagram showing relationships between a CO₂ molar fraction and a freezing point in CO₂-refrigerant mixtures, where Fig. 3(a) shows a refrigerant mixture with R32, and Fig. 3(b) shows a refrigerant mixture with R125.

**TABLE. 1**

| REFRIGERANT TO BE MIXED | | INCOM-BUSTI-BILITY | MIXING RATIO (CO₂: REFRIGERANT TO BE MIXED) | | GWP AFTER MIXING (CALCULATED IN MASS RATIO) | FREEZING POINT AFTER MIXING °C | TEMPERATURE GRADIENT AT -70 °C K |
|---|---|---|---|---|---|---|---|
| NAME | GWP (ALONE) | | M OLAR RATIO | MASS RATIO | | | |
| R290 | 3 | POOR | 71:29 | 71:29 | 1.68 | -72 | UNKNOWN |
| R32 | 675 | FAIR | 54:46 | 50: 50 | 338 | -81 | 11.9 |
| R125 | 3500 | GOOD | 50:50 | 27:73 | 2555 | -83 | 11.2 |

Conceivable combinations with which the freezing point can be brought below - 70 degrees C are, as shown in Table 1, combinations containing R290, R32, R125, and the like. However, the incombustibility of R290 is "Poor," that is, combustible, and thus R290 is difficult to use for showcases, cooling unit apparatus, or the like in terms of safety because the amount of refrigerant therefor will be large therein.

R125 alone has a GWP of 3500, which exceeds 2000 even if being mixed with CO₂. For this reason, R125 is difficult to use from the perspective of global warming prevention.

R32 alone has a GWP of 675, which is sufficiently low as compared with R125, and can have even a lower GWP by being mixed with CO₂. Therefore, R32 is suitable for a refrigerant that can support the global warming prevention. In addition, according to Fig. 3(a), it is understood that lowering the CO₂ molar fraction, that is, increasing the ratio of R32 in the refrigerant mixture can decrease the freezing point.

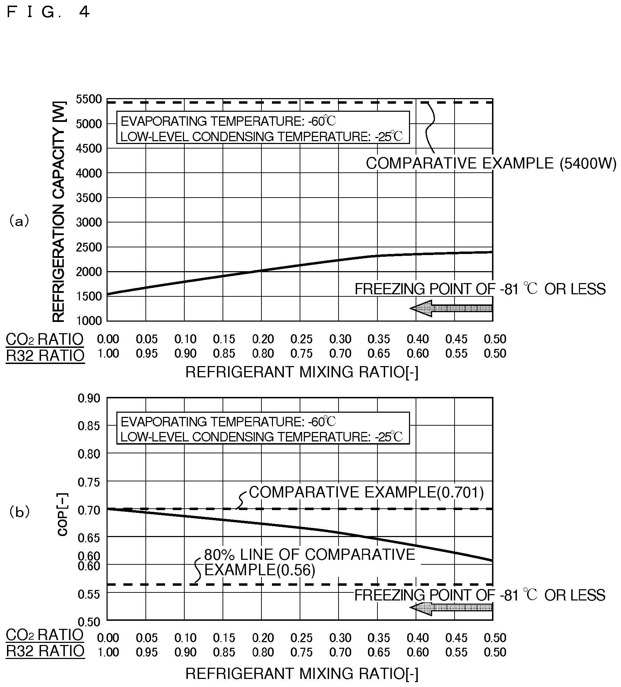

Fig. 4(a) is a diagram showing a refrigeration capacity [W] in accordance with a refrigerant mixing ratio between CO₂ and R32, and Fig. 4(b) is a diagram showing COP[-] in accordance with the refrigerant mixing ratio between CO₂ and R32. Note that, in Fig. 4, the horizontal axis shows ranges of mixing ratios within which the freezing point can be made to be -81 degrees C or less. In Fig. 4, the calculation is made assuming that the condensing temperature on the low-temperature side (low-level side) is -25 degrees C, the evaporating temperature on the low-temperature side (low-level side) is -60 degrees C, and a displacement of the low-temperature side (low-level side) compressor 5 is 30 cc. In addition, Figures 4(a) and (b) also show, as a comparative example, the refrigeration capacity (5400 W) and the COP (0.701) of a 15 HP single-stage cycle (compressor → condenser → expansion valve → evaporator) in which conventional R404A is used.

To decrease the freezing point so as to bring the evaporating temperature in the low-temperature-side evaporator 10 into -80 degrees C through -60 degrees C, which is the object of the present invention, the ratio of R32 may be increased, as described above. Increasing the ratio of R32, as is evident from Fig. 4, increases the COP, although decreasing the refrigeration capacity. However, increasing the ratio of R32 increases the GWP. The GWP of CO₂ is 1 and that of R32 alone is 675 according to Table 1, and thus, for example, when the content of R32 to the whole non-azeotropic refrigerant is 50 percent by mass, the GWP is about 340, when the ratio of R32 is increased to 65 percent by mass, the GWP is about 440, and when the ratio of R32 is further increased to 74 percent by mass, the GWP is about 500. That is, the freezing point and the GWP are in a trade-off relationship, and increasing the ratio of R32 enables the decrease of the freezing point, whereas increasing the GWP.

Therefore, the present embodiment will determine the refrigerant mixing ratio aiming to bring the GWP into a low GWP of 500 or less that is lower than 3920 or the GWP of R404A, and in addition aiming to bring the COP into 80% or more of the case of using R404A. The COP line of 80% in the case of using the R404A is shown in Fig. 4(b), and a 50 or more percent by mass of the ratio of R32 satisfies this point.

As seen from the above, the non-azeotropic refrigerant mixture mixed with CO₂ may be made in the ratio of R32 being 50 to 74 percent by mass. This ratio can bring the freezing point of the non-azeotropic refrigerant mixture into -81 degrees C or less, which is lower than the triple point of CO₂, and it is thus possible to achieve evaporating temperatures of -80 degrees C through -60 degrees C, and to configure a refrigeration apparatus with a low GWP.

Next, the operation of the refrigerant circuit 100 will be described. In the high-temperature-side circulation circuit A, the refrigerant discharged from the high-temperature-side compressor 1 is condensed into a liquid refrigerant by the high-temperature-side condenser 2. This liquid refrigerant is decompressed by the high-temperature-side expansion valve 3, evaporates into a gas refrigerant in the high-temperature-side evaporator 4 constituting the cascade condenser 14, sucked into the high-temperature-side compressor 1 again, and repeats this circulation.

In the low-temperature-side circulation circuit B, the vapor of the non-azeotropic refrigerant mixture at a high temperature and pressure that is compressed by the low-temperature-side compressor 5, is condensed and liquefied by the low-temperature-side condenser 6 constituting the cascade condenser 14 and poured into the liquid receiver 7. The liquid refrigerant flowing from the liquid receiver 7 passes through the opened electromagnetic valve 8, decompressed into a vapor-liquid-two-phase refrigerant at a low temperature and pressure by the low-temperature-side expansion valve 9, and flows into the low-temperature-side evaporator 10 (a showcase or a cooling unit apparatus). The refrigerant flowing into the low-temperature-side evaporator 10 is subjected to heat exchange with the air in the showcase to evaporate, and returns to the low-temperature-side compressor 5. Repeating this circulation generates cooling air in the low-temperature-side evaporator 10 to cool down the inside of the showcase. At this point, the discharge gas at a high temperature and high pressure discharged from the low-temperature-side compressor 5 has a temperature of more than 120 degrees C.

In the injection circuit 24, the liquid refrigerant flowing from the diverging point 26 is decompressed by the flow control valve 22, and is subjected to heat exchange in the HIC heat exchanger 21 with the liquid refrigerant that comes from the liquid receiver 7, and is subsequently injected into the positive-displacement-low-temperature-side compressor 5 via the electromagnetic injection valve 23. This injection circuit 24 can suppress the increase of the temperature of the discharge gas from the low-temperature-side compressor 5, and it is thus possible to enhance the reliability of the whole refrigeration cycle. In addition, the liquid refrigerant that comes from the liquid receiver 7 is cooled down in the HIC heat exchanger 21, and thus the range of supercooling of the liquid refrigerant can be broadened (e.g., a supercooling of 1 K is increased to 20 to 30 K), which increases the refrigeration capacity by about 20%, also increasing the COP. Note that the configuration in which this injection circuit 24 is included in the low-temperature-side circulation circuit B can be used not only in the case where the non-azeotropic refrigerant mixture such as the refrigerant mixture of CO₂ and R32 is used for the low-temperature-side circulation circuit B, but also as means for suppressing the increase of temperature of the discharge gas from the low-temperature-side compressor 5.

In addition, this Embodiment 1 is configured to include the HIC heat exchanger 21 and make the injection circuit 24 passes through the HIC heat exchanger 21, but does not necessarily include the HIC heat exchanger 21. In this case, the injection circuit 24 that branches off from the diverging point 26 is directly connected to the inside of the low-temperature-side compressor 5.

Using a refrigerant mixture that includes CO₂ and R32 and has the ratio of R32 to the whole refrigerant of 50 to 74%, and connecting the HIC heat exchanger 21 and the low-temperature-side compressor 5 with the injection circuit 24 can bring the evaporating temperature in the low-temperature-side evaporator 10 into -80 through - 60 degrees C, enabling the acquisition of a refrigeration apparatus having a low GWP and a high reliability.

### Embodiment 2

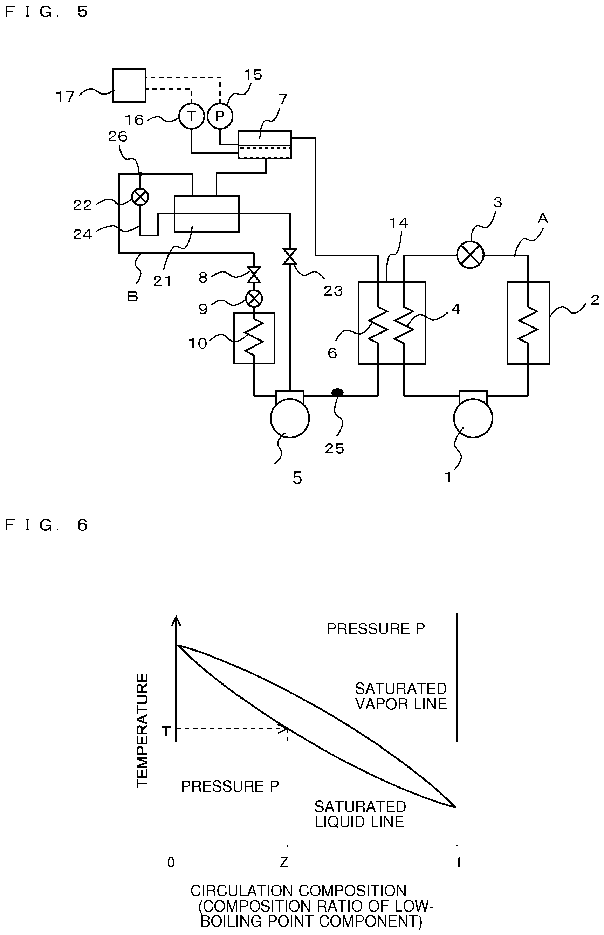

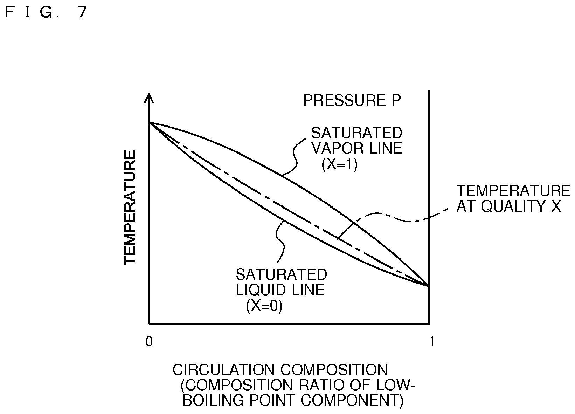

A refrigerant circuit 100 according to Embodiment 2 of the present invention will be described. Fig. 5 is a diagram where a configuration to detect a circulation composition is added to the refrigerant circuit 100 in Fig. 1. In addition, a detection principle of detecting the circulation composition of a refrigerant flowing through the refrigerant circuit 100 by a composition computing unit 17 will be described with reference to Fig. 6 and Fig. 7. Fig. 6 is the vapor-liquid equilibrium curve of a non-azeotropic refrigerant mixture illustrating a circulation composition detection principle 1 in a composition computing unit 17 in Fig. 5, and Fig. 7 is a the vapor-liquid equilibrium curve of a non-azeotropic refrigerant mixture illustrating a circulation composition detection principle 2 in the composition computing unit 17 in Fig. 5. Note that this Embodiment 2 will be described focusing on points different from those of Embodiment 1, and configurations similar to those of Embodiment 1 will be denoted by the same reference numerals.

As shown in Fig. 5, in the refrigeration apparatus according to Embodiment 2, the liquid receiver 7 is provided with a pressure detecting device 15 and a temperature detecting device 16, signals from which are input into the composition computing unit 17.

The composition computing unit 17 receives a pressure P and a temperature T of the liquid refrigerant in the liquid receiver 7 from the pressure detecting device 15 and the temperature detecting device 16. Furthermore, the composition computing unit 17 stores the vapor-liquid equilibrium relationship of the refrigerant mixture. The saturated liquid line of the non-azeotropic refrigerant mixture at the pressure P changes in accordance with the circulation composition in the refrigerant circuit 100 as shown in Fig. 6. Assuming that the refrigerant in the liquid receiver 7 is a saturated liquid, the pressure P and the temperature T detected by the pressure detecting device 15 and the temperature detecting device 16 allows the circulation composition in the refrigerant circuit 100 Z to be computed. Note that the computation may be made using not only the saturated liquid line, but also a saturated vapor line.

In addition, methods of detecting the circulation composition are not limited to the above-described method, and the circulation composition may be calculated as described in the following. In the case of a non-azeotropic two-stage refrigerant mixture, determining a quality X of the refrigerant (= refrigerant vapor mass flow rate/all refrigerant flow) and the temperature and the pressure of a refrigerant having this quality X allows the computation of the circulation composition to be computed. That is, in the non-azeotropic two-stage refrigerant mixture, at a constant pressure P, the temperature and the circulation composition of the refrigerant having the quality X have a relationship therebetween shown by a dash-dot line in Fig. 7, including the saturated vapor line having a quality X = 1 and a saturated liquid line having a quality X = 0.

That is, the temperature of the non-azeotropic refrigerant mixture in the vapor-liquid-two-phase state having the quality X at the pressure P changes in accordance with the circulation composition in the refrigerant circuit 100 as shown in Fig. 7. Therefore, by making use of this relationship, the determination of the pressure, the temperature, and the quality of the refrigerant in the vapor-liquid-two-phase state, also including the saturated vapor and the saturated liquid enables the circulation composition in the refrigerant circuit 100 to be detected. That is, using the temperature T detected by the temperature detecting device 16, the pressure P detected by the pressure detecting device 15, and the quality X in the liquid receiver 7 enables the detection of the circulation composition in the refrigerant circuit 100.

Note that, in this Embodiment 2, the liquid receiver 7 is provided with the pressure detecting device 15, but the pressure detecting device 15 may be provided on the discharge-side of the low-temperature-side compressor 5 to detect the discharge pressure of the low-temperature-side compressor 5, and a pressure in the low-temperature-side condenser 6 calculated in terms of a pressure drop may be considered to be the pressure of a liquid refrigerant flowing into the liquid receiver 7. In addition, in the present embodiment, the liquid receiver 7 is provided with the temperature detecting device 16, but the temperature detecting device 16 may be provided in the outlet of the low-temperature-side condenser 6, and the outlet-liquid temperature of the low-temperature-side condenser 6 may be considered as the temperature of the liquid refrigerant flowing into the liquid receiver 7.

Non-azeotropic refrigerant mixtures have characteristics that the composition thereof changes with the change in the temperature thereof. In addition, as shown in Table 1, the refrigerant mixture of CO₂ and R32 has a steep temperature gradient (11 K to 12 K), and it is thus necessary to precisely detect the circulation composition.

Using the refrigeration apparatus according to this Embodiment 2 enables precise detection of the circulation composition in the case where the non-azeotropic two-stage refrigerant mixture of CO₂ and R32 is used in the low-temperature-side circulation circuit B, enabling the appropriate control of the rotation speed of the low-temperature-side compressor 5 in the low-temperature-side circulation circuit B, the opening degree of the low-temperature-side expansion valve 9, or both of them, in accordance with the circulation composition.

Using a refrigerant mixture that includes CO₂ and R32 and has the ratio of R32 to the whole refrigerant mixture of 50 to 74%, and connecting the HIC heat exchanger 21 and the low-temperature-side compressor 5 with the injection circuit 24 can precisely control the evaporating temperature in the low-temperature-side evaporator 10 to -80 through -60 degrees C, enabling the acquisition of a refrigeration apparatus having a low GWP and a high reliability. Furthermore, precisely controlling the circulation composition enables the temperature of the low-temperature-side evaporator 10 to be a precisely controlled, enabling the control of the temperature in a showcase to a desired temperature.

Note that, in the above-described, the refrigerant mixture of CO₂ and R32 is used in the low-temperature-side circulation circuit B, but adding an HFO1234yf or HFO1234ze to make a non-azeotropic refrigerant mixture composed of three kinds of refrigerants can achieve evaporating temperatures of about -80 through -60 degrees C with an even lower GWP. In the case of a non-azeotropic refrigerant mixture composed of two kinds of refrigerants, determining the temperature, the pressure, and the quality results in the determination of a composition Z1 of a first component. The determination of the composition Z1 of the first component results in the determination of a composition Z2 of a second component as (1-Z1). However, in the case of the non-azeotropic refrigerant mixture composed of the three kinds of refrigerants, only the determination of the composition Z1 of the first component does not result in the composition of the whole non-azeotropic refrigerant mixture because the combination of the composition Z2 of the second component and a composition Z3 of a third component is unlimited. Nevertheless, increasing the number of the temperature detecting devices 16 and the pressure detecting devices 15 enables temperatures and pressures at the devices to be determined, and thus the increase of the kinds of refrigerants to be mixed can be dealt with the increase of the temperature detecting devices 16 and the pressure detecting devices 15.

### Reference Signs List

1 high-temperature-side compressor, 2 high-temperature-side condenser, 3 high-temperature-side expansion valve, 4 high-temperature-side evaporator, 5 low-temperature-side compressor, 6 low-temperature-side condenser, 7 liquid receiver, 8 electromagnetic valve, 9 low-temperature-side expansion valve, 10 low-temperature-side evaporator, 14 cascade condenser, 15 pressure detecting device, 16 temperature detecting device, 17 composition computing unit, 20 controller, 21 HIC heat exchanger, 22 flow control valve, 23 electromagnetic injection valve, 24 injection circuit, 25 low-temperature-side discharge thermometer, 26 diverging point, A high-temperature-side circulation circuit, B low-temperature-side circulation circuit, 100 refrigerant circuit

## Claims

1. A refrigeration apparatus (100) comprising:
a high-temperature-side circulation circuit (A) in which a high-temperature-side compressor (1), a high-temperature-side condenser (2), a high-temperature-side expansion valve (3), and a high-temperature-side evaporator (4) are connected in series;
a low-temperature-side circulation circuit (B) in which a low-temperature-side compressor (5), a low-temperature-side condenser (6), an HIC (Heat Inter Changer) heat exchanger (21), a low-temperature-side expansion valve (9), and a low-temperature-side evaporator (10) are connected in series;
a cascade condenser (14) that connects the high-temperature-side evaporator (4) and the low-temperature-side condenser (6) in a heat exchangeable manner;
an injection circuit (24) that branches off between the HIC heat exchanger (21) and the low-temperature-side expansion valve (9), and is connected to an inside of the low-temperature-side compressor (5); **characterised in that** a refrigerant mixture including C02 and R32 and having a ratio of R32 to a whole refrigerant mixture of 50 to 74% flows through the low-temperature-side circulation circuit (B);
a flow control valve (22) is provided in the injection circuit (24) and is configured to adjust
a pressure of refrigerant flowing into the injection circuit (24);
a low-temperature-side discharge thermometer (25) is configured to measure a temperature of gas discharged from the low-temperature-side compressor (5);
an electromagnetic injection valve (23) is provided in the injection circuit (24) and is configured to adjust
an amount of refrigerant flowing into the low-temperature-side compressor (5); and
a controller (20) is configured to give an instruction to the electromagnetic injection valve (23) in accordance with a measured value of the low-temperature-side discharge thermometer (25),
wherein heat exchange is performed between the injection circuit (24) and the HIC heat exchanger (21), and
wherein the controller (20) is configured to raise an opening degree of the electromagnetic injection valve (23) when the measured value of the low-temperature-side discharge thermometer (25) exceeds a predetermined value, and is configured to reduce the opening degree of the electromagnetic injection valve (23) when the measured value of the low-temperature-side discharge thermometer (25) falls below the predetermined value.

2. The refrigeration apparatus (100) of claim 1, further comprising:
a liquid receiver that is connected between the low-temperature-side condenser (6) and the HIC heat exchanger (21);
a pressure detecting device (15) that is configured to detect
a pressure in the liquid receiver;
a temperature detecting device (16) that is configured to detect
a temperature in the liquid receiver; and
a composition computing unit (17) that is configured to store
a vapor-liquid equilibrium relationship of the refrigerant mixture, and to compute a composition of the refrigerant mixture flowing through the low-temperature-side circulation circuit (B) based on pressure information from the pressure detecting device (15) and temperature information from the temperature detecting device (16).

3. The refrigeration apparatus (100) of claim 2, wherein the controller (20) is configured to control a rotation speed of the low-temperature-side compressor (5) or the opening degree of the low-temperature-side expansion valve (9), in accordance with the composition computed by the composition computing unit (17).

## Patentansprüche

1. Kältevorrichtung (100), umfassend:
einen hochtemperaturseitigen Zirkulationskreislauf (A), in dem ein hochtemperaturseitiger Verdichter (1), ein hochtemperaturseitiger Kondensator (2), ein hochtemperaturseitiges Expansionsventil (3) und ein hochtemperaturseitiger Verdampfer (4) in Reihe verbunden sind;
einen niedertemperaturseitigen Zirkulationskreislauf (B), in dem ein niedertemperaturseitiger Verdichter (5), ein niedertemperaturseitiger Kondensator (6), ein HIC (Heat Inter Changer)- Wärmetauscher (21), ein niedertemperaturseitiges Expansionsventil (9) und ein niedertemperaturseitiger Verdampfer (10) in Reihe verbunden sind;
einen Kaskadenkondensator (14), der den hochtemperaturseitigen Verdampfer (4) und den niedertemperaturseitigen Kondensator (6) in wärmetauschbarer Weise verbindet;
einen Einspritzkreislauf (24), der zwischen dem HIC-Wärmetauscher (21) und dem niedertemperaturseitigen Expansionsventil (9) abzweigt und mit einer Innenseite des niedertemperaturseitigen Verdichters (5) verbunden ist;
**dadurch gekennzeichnet, dass** ein Kältemittelgemisch, das C02 und R32 umfasst und ein Verhältnis von R32 zu einem gesamten Kältemittelgemisch von 50 bis 74% aufweist, durch den niedertemperaturseitigen Zirkulationskreislauf (B) strömt;
ein Strömungssteuerventil (22) in dem Einspritzkreislauf (24) vorgesehen ist und eingerichtet ist, einen Druck des in den Einspritzkreislauf (24) strömenden Kältemittels anzupassen;
ein niedertemperaturseitiges Auslassthermometer (25) eingerichtet ist, eine Temperatur von aus dem niedertemperaturseitigen Verdichter (5) ausgegebenem Gas zu messen;
ein elektromagnetisches Einspritzventil (23) in dem Einspritzkreislauf (24) vorgesehen ist und eingerichtet ist, eine Menge von in den niedertemperaturseitigen Verdichter (5) strömendem Kältemittel anzupassen; und
eine Steuereinheit (20) eingerichtet ist, dem elektromagnetischen Einspritzventil (23) in Übereinstimmung mit dem niedertemperaturseitigen Auslassthermometer (25) eine Anweisung zu geben,
wobei Wärmetausch zwischen dem Einspritzkreislauf (24) und dem HIC-Wärmetauscher (21) durchgeführt wird, und
wobei die Steuereinheit (20) eingerichtet ist, einen Öffnungsgrad des elektromagnetischen Einspritzventils (23) zu erhöhen, wenn der gemessene Wert des niedertemperaturseitigen Auslassthermometers (25) einen vorbestimmten Wert übersteigt, und eingerichtet ist, den Öffnungsgrad des elektromagnetischen Einspritzventils (23) zu reduzieren, wenn der gemessene Wert des niedertemperaturseitigen Auslassthermometers (25) unter den vorbestimmten Wert fällt.

2. Kältevorrichtung (100) nach Anspruch 1, ferner umfassend:
einen Flüssigkeitssammler, der zwischen dem niedertemperaturseitigen Kondensator (6) und dem HIC-Wärmetauscher (21) verbunden ist;
eine Druckerfassungseinrichtung (15), die eingerichtet ist, einen Druck in dem Flüssigkeitssammler zu erfassen;
eine Temperaturerfassungseinrichtung (16), die eingerichtet ist, eine Temperatur in dem Flüssigkeitssammler zu erfassen; und
eine Zusammensetzungsberechnungseinheit (17), die eingerichtet ist, eine Dampf-Flüssigkeit-Gleichgewichtsbeziehung des Kältemittelgemischs zu speichern und eine Zusammensetzung des durch den niedertemperaturseitigen Zirkulationskreislauf (B) strömenden Kältemittelgemischs auf Grundlage von Druckinformationen von der Druckerfassungseinrichtung (15) und Temperaturinformationen von der Temperaturerfassungseinrichtung (16) zu berechnen.

3. Kältevorrichtung (100) nach Anspruch 2, wobei die Steuereinheit (20) eingerichtet ist, eine Drehgeschwindigkeit des niedertemperaturseitigen Verdichters (5) oder den Öffnungsgrad des niedertemperaturseitigen Expansionsventils (9) in Übereinstimmung mit der durch die Zusammensetzungsberechnungseinheit (17) berechneten Zusammensetzung zu berechnen.

## Revendications

1. Appareil de réfrigération (100) comprenant :
un circuit de circulation côté haute température (A) dans lequel un compresseur côté haute température (1), un condenseur côté haute température (2), une vanne de détente côté haute température (3), et un évaporateur côté haute température (4) sont raccordés en série ;
un circuit de circulation côté basse température (B) dans lequel un compresseur côté basse température (5), un condenseur côté basse température (6), un échangeur de chaleur HIC (Heat Inter Changer) (21), une vanne de détente côté basse température (9), et un évaporateur côté basse température (10) sont raccordés en série ;
un condenseur en cascade (14) qui relie l'évaporateur côté haute température (4) et le condenseur côté basse température (6) de façon à échanger de la chaleur ;
un circuit d'injection (24) qui se branche entre l'échangeur de chaleur HIC (21) et la vanne de détente côté basse température (9), et est raccordé à l'intérieur du compresseur côté basse température (5) ; **caractérisé en ce que**
un mélange de fluides frigorigènes comprenant CO₂ et R32 et ayant un rapport de R32 au mélange de fluides frigorigènes total de 50 à 74 % s'écoule à travers le circuit de circulation côté basse température (B) ;
une vanne de régulation de débit (22) est disposée dans le circuit d'injection (24) et est configurée pour ajuster une pression de fluide frigorigène s'écoulant dans le circuit d'injection (24) ;
un thermomètre d'évacuation côté basse température (25) est configuré pour mesurer une température de gaz évacué depuis le compresseur côté basse température (5) ;
une vanne d'injection électromagnétique (23) est disposée dans le circuit d'injection (24) et est configurée pour ajuster une quantité de fluide frigorigène s'écoulant dans le compresseur côté basse température (5) ; et
un dispositif de commande (20) est configuré pour donner une instruction à la vanne d'injection électromagnétique (23) conformément à une valeur mesurée du thermomètre d'évacuation côté basse température (25),
dans lequel un échange de chaleur est effectué entre le circuit d'injection (24) et l'échangeur de chaleur HIC (21), et
dans lequel le dispositif de commande (20) est configuré pour augmenter un degré d'ouverture de la vanne d'injection électromagnétique (23) lorsque la valeur mesurée du thermomètre d'évacuation côté basse température (25) dépasse une valeur prédéterminée, et : est configuré pour réduire le degré d'ouverture de la vanne d'injection électromagnétique (23) lorsque la valeur mesurée du thermomètre d'évacuation côté basse température (25) diminue au-dessous de la valeur prédéterminée.

2. Appareil de réfrigération (100) selon la revendication 1, comprenant en outre :
un récepteur de liquide qui est raccordé entre le condenseur côté basse température (6) et l'échangeur de chaleur HIC (21) ;
un dispositif de détection de pression (15) qui est configuré pour détecter une pression dans le récepteur de liquide ;
un dispositif de détection de température (16) qui est configuré pour détecter une température dans le récepteur de liquide ; et
une unité de calcul de composition (17) qui est configurée pour stocker une relation d'équilibre vapeur-liquide du mélange de fluides frigorigènes, et pour calculer une composition du mélange de fluides frigorigènes s'écoulant à travers le circuit de circulation côté basse température (B) sur la base d'informations de pression provenant du dispositif de détection de pression (15) et d'informations de température provenant du dispositif de détection de température (16).

3. Appareil de réfrigération (100) selon la revendication 2, dans lequel le dispositif de commande (20) est configuré pour commander une vitesse de rotation du compresseur côté basse température (5) ou le degré d'ouverture de la vanne de détente côté basse température (9), conformément à la composition calculée par l'unité de calcul de composition (17).
